# EUROPEAN PATENT APPLICATION

(11) **EP 2 320 437 A1**
(43) Date of publication of application: **11.05.2011**
(21) Application number: 09811554.6
(22) Date of filing: 03.09.2009
(51) Int. Cl.: H01F 1/36, C01G 49/08, C07K 16/00, C08J 3/12

(54) **TEMPERATURE-RESPONSIVE MAGNETIC FINE GRAINS CAPABLE OF FREEZE DRYING**

(30) Priority: 05.09.2008 JP 2008228425
(71) Applicant: Chisso Corporation, Osaka 530-6108 (JP)
(72) Inventor: EGUCHI, Masaru, Ichihara-shi Chiba 290-8551 (JP)
(74) Representative: Westwood, Joanna
(86) International application number: PCT/JP2009/065439
(87) International publication number: WO 2010/027029

(57) **Abstract**

A magnetic fine particle comprising a composite of an iron oxide and polyalkyleneimine, wherein a surface of the magnetic fine particle is modified with a temperature-responsive high molecular weight compound, is prepared.

## Description

### Technical Field

The present invention relates to temperature-responsive magnetic fine particles which can be reused after lyophilization.

### Background Art

Temperature-responsive magnetic fine particles, wherein a temperature-responsive high molecular weight compound such as poly(isopropylacrylamide) exhibiting a lower critical solution temperature (hereinafter referred to as "LCST") and polyglycineamide exhibiting an upper critical solution temperature (hereinafter referred to as "UCST") in a state of aqueous solution, is immobilized to magnetic fine particles containing as main components magnetite and polyvalent alcohol such as dextran or the like having a particle diameter of about 100 to 200 nm, are known (see, for example, Patent Document 1 and Non-Patent Documents 1 and 2).
The temperature-responsive magnetic fine particles have a particle diameter of 100 to 200 nm, and are well dispersed in water. The temperature-responsive magnetic fine particles which have small particle diameter as described above, cannot be recovered in a dispersed state by means of the magnetic force, because the Brownian movement is larger than the magnetic force. However, when the temperature-responsive magnetic fine particles are heated so that the temperature becomes not less than LCST, the aggregation occurs to form aggregates. Therefore, the temperature-responsive magnetic fine particles can be easily recovered by means of the magnetic force. Further, the aggregates are dispersed again when the temperature becomes not more than LCST, thus the state is reversible.

It has been attempted to separate various biological molecules and microorganisms by using temperature-responsive magnetic fine particles prepared by immobilizing, for example, antibodies or antigens to the temperature-responsive magnetic fine particles as described above. It is known that such temperature-responsive magnetic fine particles exhibit higher binding capacities and reactivities as compared with particles of micron size (see, for example, Patent Document 2).

However, when the temperature-responsive magnetic fine particles which contain polyvalent alcohol as described above are lyophilized, the lyophilization can be performed, but lyophilized matters cannot be dispersed in nanoscale, unlike those without the lyophilization, if the lyophilized matters are thereafter dispersed in an aqueous medium again. As a result, the temperature-responsive function, which has been provided before the lyophilization, disappears, and the reversibility disappears.

Patent Document 3 discloses a water-soluble cationic magnetic fine particle in which a substance having a cationic functional group, a substance having a hydroxyl group, and a magnetic material are combined by means of the covalent bond or the physical adsorption. Although polyethyleneimine is exemplified as a substance having the cationic functional group, the substance having the hydroxyl group such as polyvalent alcohol or the like is used as an essential component in this case, and the substance having the cationic functional group is bound thereto. Further, any temperature-responsive high molecular weight compound is not disclosed.
Patent Document 4 discloses a magnetic nanoparticle having a biochemical activity composed of a magnetic core particle and an envelope layer immobilized to the core particle. Further, polyethyleneimine is described as an example of a biocompatible substrate as a component thereof. However, any temperature-responsive high molecular weight compound is not disclosed.
Patent Document 5 discloses a magnetic particle to which an amine compound is immobilized. Further, polyethyleneimine is described as an example of the amine compound. However, any temperature-responsive high molecular weight compound is not disclosed.

### Prior Art Documents

### Patent Document

Patent Document 1: JP2005-082538A
Patent Document 2: JP2007-056094A
Patent Document 3: JP2007-112904A
Patent Document 4: JP2003-509034A
Patent Document 5: JP2002-17400A

### Non-Patent Document

Non-Patent Document 1: Appl. Microbiol. Biotechnol., 1994, vol. 41, pp. 99-105;
Non-Patent Document 2: Journal of Fermentation and Bioengineering, 1997, vol. 84, pp. 337-341.

### Summary of the Invention

An object of the present invention is to provide a temperature-responsive magnetic fine particle which maintains reversibility and which is dispersible in an aqueous medium again even after the temperature-responsive magnetic fine particle is lyophilized.

The present inventors have diligently performed the investigation in order to solve the problem. As a result, it has been found out that the dispersion can be caused again in an aqueous medium, the reversibility can be maintained, and the aggregation can be achieved in response to the temperature even after the lyophilization is performed, by using polyethyleneimine as a dispersing agent for a magnetic material of iron oxide and allowing a temperature-responsive high molecular weight compound to bind to a surface. Thus, the present invention has been completed.

That is, the present invention has the following features.
(1) A magnetic fine particle comprising a composite of an iron oxide and polyalkyleneimine, wherein a surface of the magnetic fine particle is modified with a temperature-responsive high molecular weight compound.
(2) The magnetic fine particle according to (1), wherein an average particle diameter is not more than 500 nm.
(3) The magnetic fine particle according to (1) or (2), wherein the iron oxide is at least one selected from magnetite, ferrite, hematite, and goethite.
(4) The magnetic fine particle according to any one of (1) to (3), wherein polyalkyleneimine is polyethyleneimine.
(5) The magnetic fine particle according to any one of (1) to (4), wherein the temperature-responsive high molecular weight compound is a high molecular weight compound having a lower critical solution temperature or an upper critical solution temperature.
(6) The magnetic fine particle according to any one of (1) to (4), wherein the temperature-responsive high molecular weight compound is a copolymer of N-isopropylacrylamide and N-t-butylacrylamide.
(7) The magnetic fine particle according to any one of (1) to (6), wherein a biological substance-binding molecule is further bound to the magnetic fine particle.

### Brief Description of the Drawings

Fig. 1 shows an electron microscopic photograph of prepared magnetite.
Fig. 2 shows results of the measurement of zeta-potential at respective pH's in relation to magnetite and a magnetite-PEI composite.
Fig. 3 schematically shows a method for preparing temperature-responsive magnetic fine particles.
Fig. 4 shows photographs illustrating the transmissive properties obtained when a magnetite-dextran composite and a magnetite-PEI composite are redispersed after the lyophilization.
Fig. 5 shows results (photographs) of magnetic separation experiments for redispersion liquids obtained by redispersing a magnetite-dextran composite and a magnetite-PEI composite (PEI06K: molecular weight of 600, PEI70K: molecular weight of 70,000) after the lyophilization.

### Mode for carrying out the Invention

The magnetic fine particle of the present invention is composed of the composite of the iron oxide and polyalkyleneimine, and the surface of the magnetic fine particle is subjected to the surface modification with the temperature-responsive high molecular weight compound. The composite of the iron oxide and polyalkyleneimine may further include other inorganic substances and organic substances. However, it is preferable that the composite does not include any polyvalent alcohol such as dextran or the like.
The iron oxide is exemplified by magnetite, ferrite, hematite, and goethite. It is more preferable to use magnetite.
Polyalkyleneimine is exemplified by polyethyleneimine (hereinafter abbreviated as "PEI" in some cases) and polypropyleneimine. It is more preferable to use polyethyleneimine. The molecular weight of polyalkyleneimine is preferably 600 to 70,000.
The amount ratio between the iron oxide and polyalkyleneimine is preferably 1:0.2 to 1:20 and more preferably 1:1 to 1:10 in weight ratio.

The composite of the iron oxide and polyalkyleneimine can be obtained by mixing the iron oxide and polyalkyleneimine in water. The composite is formed preferably at pH 3 to 6 and more preferably at pH 4 to 5.

The cumulant analysis average particle diameter of the magnetic fine particles surface-modified with the temperature-responsive high molecular weight compound is preferably 50 to 500 nm and more preferably 50 to 100 nm.

The temperature-responsive high molecular weight compound, which is used as the fine particle of the present invention, is a high molecular weight compound wherein the structure changes in response to the temperature change and the aggregation and the dispersion are adjustable. The temperature-responsive high molecular weight compound includes the high molecular weight compound having the upper critical solution temperature (hereinafter referred to as "UCST" in some cases) and the high molecular weight compound having the lower critical solution temperature (hereinafter referred to as "LCST" in some cases).
However, it is more preferable to use the high molecular weight compound having LCST, for example, in view of the handleability.

The high molecular weight compound having LCST may include, for example, polymers obtained by polymerizing at least one monomer selected from N-substituted (metha)acrylamide derivatives such as N-n-propylacrylamide, N-isopropylacrylamide, N-t-butylacrylamide, N-ethylacrylamide, N,N-dimethylacrylamide, N-acryloylpyrrolidine, N-acryloylpiperidine, N-acryloylmorpholine, N-n-propylmethacrylamide, N-isopropylmethacrylamide, N-ethylmethacrylamide, N,N-dimethylmethacrylamide, N-methacryloylpyrrolidine, N-methacryloylpiperidine, and N-methacryloylmorpholine; polyoxyethylene alkylamine derivatives such as hydroxypropyl cellulose, partially acetylated product of polyvinyl alcohol, polyvinyl methyl ether, (polyoxyethylene-polyoxypropylene) block copolymer, and polyoxyethylene laurylamine; polyoxyethylene sorbitan ester derivatives such as polyoxyethylene sorbitan laurate; and polyoxyethylene (metha)acrylic acid ester derivatives including, for example, (polyoxyethylene alkylphenyl ether) (metha)acrylates such as (polyoxyethylene nonylphenyl ether) acrylate and (polyoxyethylene octylphenyl ether) methacrylate, and (polyoxyethylene alkyl ether) (metha)acrylates such as (polyoxyethylene lauryl ether) acrylate and (polyoxyethylene oleyl ether) methacrylate.

In the present invention, a copolymer of N-isopropylacrylamide and N-t-butylacrylamide is more preferably used.

The high molecular weight compound having UCST may include, for example, homopolymers or copolymers obtained by polymerizing at least one monomer selected from the group consisting of acryloylglycineamide, acryloylnipecotamide, and acryloylasparagineamide.

LCST or UCST can be controlled by changing the ratio and/or the type of the monomer to be polymerized or copolymerized in the case of both of the high molecular weight compound having LCST and the high molecular weight compound having UCST. Therefore, it is possible to design the polymer in conformity with the temperature to be used.

The polymerization degree of the temperature-responsive high molecular weight compound preferably used in the present invention is usually 50 to 10000.

The temperature-responsive high molecular weight compound can be obtained in accordance with the following production method. That is, the above-mentioned monomer is dissolved in an organic solvent or water, and the system is substituted with inert gas. After that, the temperature is raised to the polymerization temperature. A polymerization initiator is added, wherein the polymerization initiator is exemplified, for example, by an azo-based initiator such as azobisisobutyronitrile and a peroxide such as benzoyl peroxide to be used in the organic solvent, or ammonium persulfate, potassium persulfate, 2,2'-azobis(2-amidinopropane) dihydrochloride, and 4,4'-azobis(4-cyanovaleric acid) to be used in water. The heating is continued while performing the stirring to obtain the temperature-responsive high molecular weight compound. After that, the reprecipitation is performed in a poor solvent. Precipitated polymer is obtained by means of the filtration, or the polymer is aggregated by applying the temperature change stimulation to aggregate the polymer so that the polymer is separated by means of the centrifugation. According to the technique as described above, the produced polymer can be purified.

For example, the following method is available to bind the magnetic fine particles and the temperature-responsive high molecular weight compound. That is, the covalent bond is formed by reacting the imino group of polyalkyleneimine with the reactive functional group of the temperature-responsive high molecular weight compound itself or the reactive functional group introduced into the temperature-responsive high molecular weight compound. Thus, the magnetic fine particles subjected to the surface modification with the temperature-responsive high molecular weight compound can be obtained.

The modification is performed with the temperature-responsive high molecular weight compound preferably in a thickness of 1 to 100 nm, more preferably 5 to 50 nm on the surfaces of the magnetic fine particles.

Further, a biological substance-binding molecule may be bound to the magnetic fine particles of the present invention. The biological substance-binding molecule is not specifically limited provided that the biological substance-binding molecule is capable of binding to biological molecules including, for example, proteins, peptides, and sugars. However, there are exemplified, for example, biotin, avidin, lectin, glutathione, antigen, antibody, protein A, and enzyme.
For example, when biotin is bound as the biological substance-binding molecule, the magnetic fine particle of the present invention can adsorb the biological molecule such as protein labeled with avidin. In this procedure, when the antibody is adopted as the protein, and the antibody is bound to the magnetic fine particle by the aid of biotin, then the magnetic fine particle of the present invention can be used to detect a target antigen contained in a biological sample. On the other hand, when protein A is adopted as the protein, and protein A is bound to the magnetic fine particle by the aid of biotin, then the magnetic fine particle of the present invention can be used to purify the antibody. Further, when the enzyme is adopted as the protein, and the enzyme is bound to the magnetic fine particle by the aid of biotin, then the magnetic fine particle of the present invention can be used to convert the substance.
When glutathione is bound as the biological substance-binding molecule, the magnetic fine particle of the present invention can be used for the purification of GST fusion protein and the GST pull-down assay.
When lectin is bound as the biological substance-binding molecule, the magnetic fine particle of the present invention can be used to detect and/or purify the sugar chain.

A method for binding the temperature-responsive high molecular weight compound and the antibody will be described as an example of the binding between the temperature-responsive high molecular weight compound and the biological substance-binding molecule. As described in International Publication No. WO/01/009141, biotin can be bound to a temperature-responsive high molecular weight compound such that biotin is bound to a polymerizable functional group including, for example, the methacryl group and the acrylic group to produce an addition polymerizable monomer (for example, N-biotinyl-N'-methacroyl trimethylene amide), followed by being copolymerized with another monomer.
On the other hand, an antibody can be bound to a temperature-responsive high molecular weight compound by utilizing the binding between avidin and biotin such that avidin is bound to the antibody as a ligand, followed by being mixed with a biotin-binding temperature-responsive high molecular weight compound. When glutathione is used in place of biotin, it is appropriate to use glutathione S-transferase instead of avidin. Alternatively, the following method can also be utilized. That is, a monomer which has a functional group including, for example, the carboxyl group, the amino group, and the epoxy group, is copolymerized with another monomer during the polymerization of a polymer, and an antibody affinity substance (for example, Melon Gel, protein A, and protein G) is bound onto the polymer by the aid of the functional group in accordance with any method well-known in the concerning technical field. The antibody is bound to the antibody affinity substance obtained as described above, and thus the antibody can be bound to the temperature-responsive high molecular weight compound.

A method for separating a detection target substance (biological molecule) contained in a sample by using the magnetic fine particles of the present invention comprises (1) a step of mixing the sample and the magnetic fine particles and (2) a step of recovering the magnetic fine particles to which the biological molecule contained in the sample is adsorbed, by means of the magnetic force.

The magnetic force of a magnet or the like, which is used to recover the magnetic fine particles of the present invention, differs depending on, for example, the magnitude of the magnetic force possessed by the magnetic fine particles to be used. As for the magnetic force, it is possible to appropriately use the magnetic force to such an extent that the target magnetic fine particles can be magnetically collected. As for the material of the magnet, it is possible to utilize, for example, a neodymium magnet produced by Magna. The temperature-responsive high molecular weight compound is immobilized on the surface of the magnetic fine particles as described above. Accordingly, the "magnetic fine particles of nano size", which are difficult to be recovered in the dispersed state, can be purposely aggregated, and it is possible to raise the recovery rate.

A method for detecting the detection target substance contained in the sample further comprises (3) a step of detecting the detection target substance bound to the biological molecule-binding molecule on the magnetic fine particles after the steps of (1) and (2).

An example is shown below, in which an antigen as the detection target substance is detected and measured in accordance with the sandwich method using a fluorescent dye.
(a) The magnetic fine particles having surfaces modified with the temperature-responsive high molecular weight compound, to which an antibody a for an antigen intended to be detected and measured is bound in accordance with the biotin-avidin interaction as described above, are mixed with a specimen which contains the antigen as the detection target substance, followed by being reacted in a reaction vessel.
(b) The magnetic fine particles are magnetically collected onto the wall of the reaction vessel by means of a magnet, and the liquid portion, which contains unnecessary components in the specimen, is removed. A washing buffer is added, and the magnet is removed to resuspend the magnetic fine particles. Further, the magnetic fine particles are magnetically collected, and the washing buffer is removed. The same or equivalent operation is repeated to wash the magnetic fine particles.
(c) A solution of an antibody b labeled with a fluorescent dye to recognize a site different from that for the antibody a described above with respect to the antigen intended to be detected and measured is mixed, followed by being reacted in a reaction vessel.
(d) The magnetic fine particles are magnetically collected onto the wall of the reaction vessel by means of the magnet. The liquid portion, which contains any excessive component in the solution of the antibody b, is removed. The magnet is removed to resuspend the magnetic fine particles. The same or equivalent operation is repeated to wash the magnetic fine particles.
(e) The fluorescence intensity of the fluorescent dye is measured.

In this example, the method is shown by way of example, wherein the antibody b, which is labeled with the fluorescent dye to recognize the site different from that for the antibody a described above with respect to the antigen, is used as a detecting reagent, and the fluorescence is measured. However, it is possible to adapt various methods including, for example, a method in which the radioactivity is measured by using a radio-labeled antibody b, and a method in which the light emission or coloring intensity is measured by using an antibody b labeled with an enzyme including, for example, horseradish peroxidase and alkaline phosphatase and a light-emitting or coloring reagent as a substrate for the enzyme.

The separating method or the detecting method as described above can be preferably used to separate, detect, and quantitatively determine various substances utilized for the clinical diagnostics.
Specifically, the followings are exemplified: human immunoglobulin G, human immunoglobulin M, human immunoglobulin A, human immunoglobulin E, human alubumin, human fibrinogen (fibrin and degraded products thereof), α-fetoprotein (AFP), C-reactive protein (CRP), myoglobin, carcinoembryonic antigen, hepatitis virus antigen, human chorionic gonadotropin (hCG), human placental lactogen (HPL), insulin, HIV virus antigen, allergen, bacterial toxin, bacterial antigen, enzyme, hormone, and drugs contained, for example, in body fluids, urine, sputum, and feces.

### Examples

The present invention will be explained in further detail below on the basis of Examples. However, the present invention is not limited to Examples.

### Preparation of magnetite

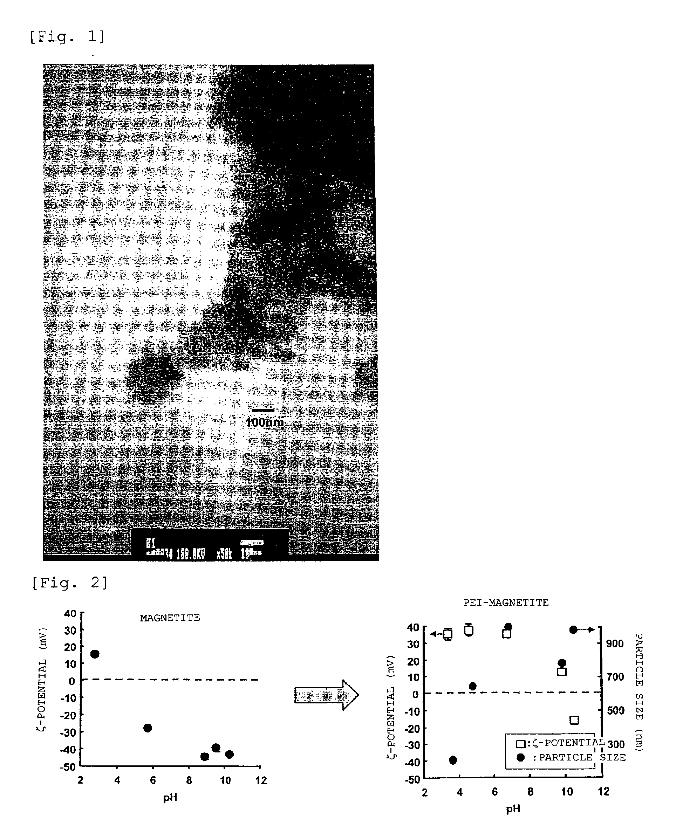

100 mL of an aqueous mixture solution of ferric chloride hexahydrate (1.0 mol) and ferrous chloride tetrahydrate (0.5 mol) was added to a flask having a volume of 200 mL, followed by being agitated with a mechanical stirrer. The temperature of the mixture solution was raised to 50°C, to which 5.0 mL of 28% by weight aqueous ammonia solution was thereafter added dropwise, followed by being agitated for about 1 hour. As a result of this operation, magnetite having an average particle diameter of about 5 nm was obtained (Fig. 1).

### Preparation of magnetite-polyethyleneimine

### composite

10 mL of aqueous solution of 10% by weight of magnetite and 5 g of polyethyleneimine were mixed, and a dispersing treatment was performed for 1 hour in an ice bath while performing an ultrasonic treatment. Excessive polyethyleneimine was removed by means of the magnetic separation. 10 mL of water was added to resuspend, and then pH of the dispersed liquid was adjusted to 4 with 1 mM hydrochloric acid aqueous solution. Accordingly, a magnetite-polyethyleneimine composite having a particle diameter of about 70 nm was obtained. In this procedure, two types of polyethyleneimine preparations were used (number average molecular weight of 600, number average molecular weight of 70,000) to produce two types of magnetite-polyethyleneimine composites.

### Evaluation of physical properties of magnetite-polyethyleneimine composite

The zeta-potential was measured at respective pH's of the magnetite and the magnetite-polyethyleneimine composite (Fig. 2). pH was adjusted by using 1 mM hydrochloric acid aqueous solution and 1 mM sodium hydroxide aqueous solution. As a result, in the case of magnetite, the electric charge was about -50 mV at pH 10 and the electric charge was about 15 mV at pH 3. On the other hand, in the case of the magnetite-polyethyleneimine composite, the electric charge was about -15 mV at pH 10 and the electric charge was about 50 mV at pH 3. According to the results described above, it was suggested that magnetite and polyethyleneimine formed the composite. As a result of the measurement of the particle diameter, it was revealed that the particle diameter was 1000 nm at pH 10, while the particle diameter was 70 nm at pH 4. It was revealed that the particle diameter has the pH dependency (Fig. 2).

### Preparation of poly-N-isopropylacrylamide-co-N-biotinyl-N'-methacryloyltrimethyleneamide-co-acrylic acid copolymer

1 g of N-isopropylacrylamide, 0.7 mg of N-biotinyl-N'-methacryloyltrimethyleneamide, and 15 mg of acrylic acid were dissolved in 100 mL of purified water (water having a conductivity of 18 MΩcm purified by a pure water producing apparatus "Direct Q" (trade name) produced by Millipore, sometimes referred to as "MillQ water") in a three-necked flask of 200 mL, followed by being substituted with nitrogen for 30 minutes. After that, a polymerization reaction was performed by adding 0.1 mL of tetramethylethylenediamine and 150 mg of peroxo ammonium bisulfate. After performing the reaction for 3 hours, the purification was performed with a dialysis membrane having a fractional molecular weight of 10,000. 0.97 g of poly-N-isopropylacrylamide-co-N-biotinyl-N'-methacroyltrimethyleneamide-co-acrylic acid copolymer was obtained by means of the lyophilization.

### Preparation of temperature-responsive magnetic fine particles

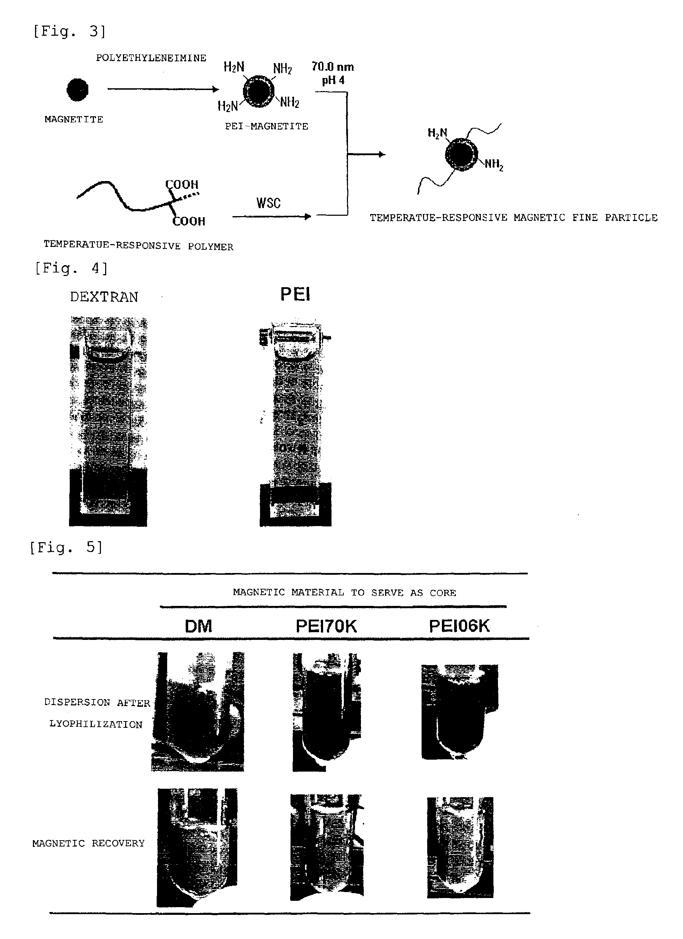

300 mg of the magnetite-polyethyleneimine composite was dispersed in 30 mL of 100 mM MES buffer (MES: 2-(N-Morpholino)ethanesulfonic Acid, pH 4.75) (dispersion liquid). The dispersion liquid was dispersed to provide a particle diameter of about 70 nm by means of the ultrasonication. On the other hand, 100 mg of poly-N-isopropylacrylamide-co-N-biotinyl-N'-methacroyltrimethyleneamide-co-acrylic acid copolymer was dissolved in 10 mL of 100 mM MES buffer, to which 100 mg of 1-ethyl-3-(3-dimethylaminopropyl)carbodiimide hydrochloride (EDAC) was added, followed by being reacted for 30 minutes (polymer liquid). After that, the dispersion liquid and the polymer liquid were dissolved, and the reaction was performed for 6 hours. After that, washing was performed twice with water to obtain temperature-responsive magnetic fine particles (Fig. 3).

On the other hand, a magnetite-dextran composite was prepared, which was surface-modified with poly-N-isopropylacrylamide-co-N-biotinyl-N'-methacroyltrimethyleneamide-co-acrylic acid copolymer to obtain temperature-responsive magnetic fine particles to be used as a control.

### Lyophilization test and resuspension test

The temperature-responsive magnetic fine particles, which were obtained previously, were dealt with such that 30 mL of the temperature-responsive magnetic fine particles were added into an egg plant flask (recovery flask) of 100 ml, and the temperature-responsive magnetic fine particles were frozen with liquid nitrogen or PFR-1000 produced by EYELA, followed by being lyophilized by using FDU-2100 produced by EYELA (the same or equivalent procedure was performed for both of the temperature-responsive magnetic fine particles including the polyethyleneimine preparation having the number average molecular weight of 600 and the temperature-responsive magnetic fine particles including the polyethyleneimine preparation having the number average molecular weight of 70000). After that, the temperature-responsive magnetic fine particles were resuspended in a phosphate buffer. For the purpose of comparison or control, the same or equivalent operation was performed for the temperature-responsive magnetic fine particles prepared with dextran.

### Magnetic separation test

1 mL of each of the dispersion liquids was dispensed into 7 mL test tube, followed by being immersed in a Temperature-controlled bath at 42°C. As for the temperature in the liquid, the temperature in the liquid was monitored by using DIGITAL THERMOMETER IT-2000 produced by AS ONE. After the temperature in the liquid arrived at 37°C, a neodymium magnet was approached to the test tube to perform the magnetic separation, and the separation state of the magnetic fine particles was observed.

### Measurement of particle diameter

Each of the dispersion liquids was dispensed in an amount of 0.2 mL, followed by being diluted to a volume of 4 mL. 3 mL thereof was transferred to a cuvette having four transmissive surfaces. The particle diameter was measured by using a laser zeta electrometer ELS-8000 produced by Otsuka Electronics Co., Ltd. The result was represented by the particle diameter distribution (Dw/Dn) obtained by dividing the particle diameter (Dw) obtained from the conversion into the weight, by the particle diameter (Dn) obtained from the conversion into the number, in order to evaluate the dispersibility of the particles.

### Result of resuspension test

The resuspension liquid was dispensed in an amount of 0.2 mL, followed by being diluted to a volume of 4 mL. The diluted liquid was transferred to a cuvette to confirm the transmissive property thereof. As a result, the following facts were revealed. That is, the preparation, which was based on the use of dextran, did not have the light transmittance state. On the contrary, the preparation, which was based on the use of polyethyleneimine, had the light transmittance state (letters described on the distal surface of the cuvette were visible). Thus, it was suggested that the temperature-responsive magnetic fine particles, which originated from polyethyleneimine, maintained the redispersibility (Fig. 4).

### Result of magnetic separation test

Fig. 5 shows results of a magnetic separation experiment for the resuspension liquids. The following facts were revealed. That is, the supernatant was turbid in the case of the temperature-responsive magnetic fine particles prepared with dextran, and any satisfactory magnetic separation was not achieved. However, the supernatant was transparent in accordance with the magnetic separation in the case of the temperature-responsive magnetic fine particles prepared with polyethyleneimine, and the magnetic fine particles were substantially formed. Further, the temperature-responsive magnetic fine particles, which were composed of polyethyleneimine, exhibited the reversible response with respect to the heating and the cooling.

### Result of measurement of particle diameter

The particle diameter before the lyophilization was about 100 nm for both of the temperature-responsive magnetic fine particles prepared with dextran and the temperature-responsive magnetic fine particles prepared with polyethyleneimine. The particle diameter distribution was 1.2 (dextran) and 1.3 (polyethyleneimine). On the other hand, the particle diameter after the lyophilization was 1860 nm (Dw/Dn = 47.7) for the temperature-responsive magnetic fine particles prepared with dextran and 107 nm (Dw/Dn = 1.5) for the temperature-responsive magnetic fine particles prepared with polyethyleneimine. According to the results described above, it has been revealed that the temperature-responsive fine particles prepared with polyethyleneimine have the same or equivalent dispersibility as that obtained before the lyophilization, even after the lyophilization.

### Industrial Applicability

The magnetic fine particles of the present invention do not lose the reversibility even when the lyophilization is performed. Therefore, it is possible to expect the long-term storage stability as compared with the conventional temperature-responsive magnetic fine particles. Further, when the biological molecule-binding molecule, which includes, for example, biotin, glutathione, antigen, antibody, and enzyme, is immobilized, the magnetic fine particles of the present invention can be used to detect and purify the biological molecule, since the reaction is performed with the sample containing the biological molecule and then the temperature-responsive high molecular weight compound is aggregated and magnetically collected. Further, the magnetic fine particles of the present invention can be reused, because the reversibility does not disappear even when the lyophilization is performed.

## Claims

1. A magnetic fine particle comprising a composite of an iron oxide and polyalkyleneimine, wherein a surface of the magnetic fine particle is modified with a temperature-responsive high molecular weight compound.

2. The magnetic fine particle according to claim 1, wherein an average particle diameter is not more than 500 nm.

3. The magnetic fine particle according to claim 1 or 2, wherein the iron oxide is at least one selected from magnetite, ferrite, hematite, and goethite.

4. The magnetic fine particle according to any one of claims 1 to 3, wherein polyalkyleneimine is polyethyleneimine.

5. The magnetic fine particle according to any one of claims 1 to 4, wherein the temperature-responsive high molecular weight compound is a high molecular weight compound having a lower critical solution temperature or an upper critical solution temperature.

6. The magnetic fine particle according to any one of claims 1 to 4, wherein the temperature-responsive high molecular weight compound is a copolymer of N-isopropylacrylamide and N-t-butylacrylamide.

7. The magnetic fine particle according to any one of claims 1 to 6, wherein a biological substance-binding molecule is further bound to the magnetic fine particle.
